# EUROPÄISCHE PATENTANMELDUNG

(11) **EP 0 911 352 A2**
(43) Veröffentlichungstag der Anmeldung: **28.04.1999**
(21) Anmeldenummer: 98119096.0
(22) Anmeldetag: 09.10.1998
(51) Int. Cl.: C08G 18/28, C09D 175/04, C09D 201/06

(54) **Einbrennüberzugsmittel und seine Verwendung**

(30) Priorität: 21.10.1997 DE 19746379
(71) Anmelder: BAYER AG, 51368 Leverkusen (DE)
(72) Erfinder: Melchiors, Martin, Dr., 51373 Leverkusen (DE); Hovestadt, Wieland, Dr., 42799 Leichlingen (DE); Brück, Jochen, Dr., 51491 Overath (DE); Engbert, Theodor, Dr., 50968 Köln (DE); Buysch, Hans-Josef, Dr., 47809 Krefeld (DE)

(57) **Zusammenfassung**

Die Erfindung betrifft ein neues Einbrennüberzugsmittel, das bei niedrigen Temperaturen ohne Abspaltung flüchtiger Verbindungen eingebrannt werden kann und gleichzeitig bei Raumtemperatur eine gute Lagerstabilität besitzt.

## Beschreibung

Die Erfindung betrifft ein neues Einbrennüberzugsmittel, das bei niedrigen Temperaturen ohne Abspaltung flüchtiger Verbindungen eingebrannt werden kann und gleichzeitig bei Raumtemperatur eine gute Lagerstabilität besitzt.

Die Lacksysteme, die zum Schutz von Substraten gegen äußere Einflüsse verwendet werden, lassen sich im wesentlichen in Zweikomponentensysteme (2K) und Einkomponentensysteme (1K) untergliedern. Bei der Zweikomponenten-Technik müssen die beiden wesentlichen Ausgangskomponenten - Bindemittel und Härter - aufgrund ihrer hohen Reaktivität getrennt gelagert und vom Verarbeiter vor Ort miteinander gemischt werden. Dies erfordert eine exakte Dosierung und erlaubt oft nur kurze Verarbeitungszeiten.

Einkomponentensysteme weisen diese Nachteile nicht auf Neben physikalisch trocknenden 1K-Systemen kennt man 1K-Reaktivsysteme, die mit Luftfeuchtigkeit aushärten (Aushärtung sensibel gegenüber Umgebungsbedingungen und Filmdicke) sowie Mischungen aus mindestens zwei Reaktivkomponenten, die zumindest eine der Komponenten in blockierter oder unreaktiver Form enthalten. Die Blockierungsmittel werden dabei thermisch abgespalten; anschließend erfolgt die Reaktion der Komponenten.

Als solche sind beispielsweise die 1K-PUR-Systeme auf Basis der bereits sehr früh z.B. im DRP 72898 beschriebenen blockierten Polyisocyanate zu nennen. Diese Systeme sind vor allem für den Bereich der industriellen Einbrennlacke, wie Autoserienlackierung und Coilcoating, breit eingeführt und zeichnen sich durch im allgemeinen sehr gute Filmeigenschaften, wie Chemikalienbeständigkeit, Kratzfestigkeit und Langzeitwetterbeständigkeit, aus. Beim Einbrennvorgang erfolgt die Vernetzung unter Freisetzung des Blockierungsmittels (siehe z.B. Progr. Coatings 3, (1975), 73 und 9 (1991), 3, was aus weiter unten noch näher erklärten Gründen als grundsätzlicher Nachteil gegenüber abspaltfreien Systemen angesehen werden muß.

Den gleichen Nachteil weisen die in jüngerer Zeit, z.B. in EP-A- 624 577 als Carbamate bezeichneten blockierten Polyisocyanate auf, die unter Umgehung der Isocyanatstufe z.B. aus Melamin und organischen Carbonaten hergestellt werden können.

Weitere Einbrenn-Systeme, die unter Freisetzung von Spaltprodukten reagieren, sind z.B. Melamin-/Formaldehyd- und Harnstoff-Formaldehyd-Harze. Freigesetzte Produkte sind hier die zur Veretherung eingesetzten Alkohole sowie - in mehr oder weniger großem Umfange - Formaldehyd. Die mangelnde Hydrolysebeständigkeit, besonders unter sauren Bedingungen, ist ein weiterer Nachteil, der die Anwendungsmöglichkeiten dieser Produkte zunehmend einschränkt.

In jüngster Zeit sind verstärkt Bemühungen unternommen worden die Säurebeständigkeit von Melaminharz-vernetzten Lacken weiter zu verbessern. U.a. werden, z.B. in der US-A 4 772 672 und EP-A 6 27 474 Zusätze von Alkoxysilangruppen enthaltenden Bindemittel vorgeschlagen. Neben dem Umstand, daß auch hier Spaltprodukte entstehen, müssen derartige Lacksysteme wegen der Hydrolysebeständigkeit der Alkoxysilyl-Einheit vor der Einwirkung von Wasser, z.B. Luftfeuchtigkeit, speziell geschützt werden. Außerdem können derartige Zusätze mit Rücksicht aufwesentliche andere Filmeigenschaften wie Flexibilität, Rißbildung und Steinschlagfestigkeit nur in begrenztem Umfange verwendet werden, was die Möglichkeiten zur nachhaltigen Verbesserung der Säurebeständgkeit einschränkt.

All diese Systeme weisen den Nachteil auf, daß bei der Aushärtung flüchtige Bestandteile freigesetzt werden, die den VOC-Wert erhöhen. Zusätzlich besteht bei höheren Filmdicken die Gefahr der Blasenbildung durch die freigesetzten Abspalter. Abspaltfreie 1K-Systeme weisen diese Nachteile nicht auf. Zur Herstellung von abspaltfreien Einbrennlacken haben sich bisher nur wenige Vernetzungsmechanismen als geeignet erwiesen.

Als wesentliche Produktklasse sind hier insbesondere die Epoxyharze zu nennen, die z.B. mit Carbonsäuregruppen enthaltenden Polyestern oder Polyacrylaten in Form einer Additionsreaktion reagieren. Für Pulverlackanwendungen haben insbesondere die aromatischen, auf Basis von z.B. Bisphenol A hergestellten Epoxyharze sowie, für Anwendungen mit höherer Wetterfestigkeit, das Tris-glycidylisocyanurat (TGIC) breite Verwendung gefunden.

Nachteilig an den aromatischen Epoxyharzen ist z.B. deren mangelnde Lichtbeständigkeit, so daß eine Verwendung zur Deckbeschichtung nur in begrenztem Umfang möglich ist. Beim aliphatischen TGIC bestehen derartige Probleme nicht, toxikologische Bedenken haben jedoch dazu geführt, daß nach Alternativen gesucht wird.

TGIC-freie aliphatische Epoxy/Carbonsäure-Systeme werden u.a. in der DE-A 2 240 312, 2 240 314, 2 457 826 oder der US-A-4 091 048 sowohl für Pulverlackanwendungen als auch für lösemittelhaltige und wäßrige Flüssiglacke beschrieben.

Nachteilig an diesem Systemen ist deren oftmals eingeschränkte Lagerstabilität, so daß eine Lagerung über längere Zeit nur unter Kühlung möglich ist. Ferner ist deren Eigenschaftsniveau für eine Reihe von Anwendungen nicht ausreichend bzw. deutlich verbesserungsbedürftig. Für die Anwendung als Automobilklarlack betrifft dies insbesondere die Punkte Steinschlagfestigkeit, Kratzempfindlichkeit und Thermovergilbung.

In der EP-A-639 598 und 727 452 werden als weitere Möglichkeit zur Herstellung von abspaltfreien Einbrennsystemen Uretdiongruppen enthaltende Harze beschrieben. Diese lassen sich bei entsprechender Katalyse unter den für Industrie-Einbrennlacke üblichen Bedingungen mit OH-Gruppen enthaltenden Verbindungen umsetzen. Ein grundsätzlicher Nachteil derartiger Systeme ist, daß die Uretdiongruppen enthaltenden Harze aufgrund der kettenverlängernden Wirkung dieser internen Isocyanat-Blockierung notwendigerweise hochmolekularer Natur sind, was sich einschränkend auf ihre Einsatzmöglichkeiten auswirkt.

Abspaltfreie Systeme, die die oben beschriebenen Nachteile nicht aufweisen, lassen sich auf Basis cyclischer Carbonate formulieren. Die Herstellung von Verbindungen mit mehreren Fünfringcarbonat-Gruppen wird z.B. in der DE-A 272 665 oder 274 721 beschrieben. Die Ringöffnung (=Vernetzung) erfolgt hier mit Aminogruppen. Hydroxygruppen sind bei den angestrebten Einbrenntemperaturen nicht reaktiv genug. So werden z.B. in der DE-A 1 953 0 225, DE-A 1 953 0 226, EP-A-661 354 oder EP-A-661 355 Beschichtungsmittel für die Elektrotauchlackierung beschrieben, die aus einer Komponente mit mehreren Fünfringcarbonat-Gruppen und einer Komponente mit mehreren primären oder sekundären Aminogruppen bestehen. Weder in den Ansprüchen noch in den Beispielen der zitierten Patente sind dagegen Verbindungen mit mehreren cyclischen Sechsringcarbonatgruppen beschrieben.

Die DE-A 4 432 647 beschreibt 1,3-Dioxan-2-on-Gruppen enthaltende Oligourethane, ein Verfahren zur ihrer Herstellung und ihre Verwendung in Kombination mit aktive Wasserstoffatome aufweisenden Verbindungen zur Herstellung von Kunststoffen oder als Bindemittel oder Bindemittelkomponente in Beschichtungsmitteln (Einkomponenten-Einbrennsysteme oder Zweikomponentensysteme). Aus den Beispielen geht hervor, daß sich bei Verwendung von Polyhydroxyverbindungen als aktive Wasserstoffatome aufweisende Verbindungen bei Raumtemperatur lagerstabile Einkomponentensysteme formulieren lassen, die bei 155°C zu harten Lackfilmen mit guter Lösemittelbeständigkeit ausgehärtet werden können (Bsp. 5).

Einbrenntemperaturen um 155°C zeigen bei 1K-PUR-Einbrennlacken keinen entscheidenden Fortschritt. Bei Verwendung von primären oder sekundären Aminogruppen tragenden Verbindungen als aktive Wasserstoffatome aufweisende Verbindungen lassen sich Einbrenntemperaturen von 80°C erreichen (Bsp. 6, 7). Allerdings sind diese Systeme aufgrund der hohen Reaktivität der Polyamine nicht lagerstabil bei Raumtemperatur und damit als Zweikomponentensysteme einzuordnen. Es wird dagegen in der DE-A- 4 432 647 kein Einkomponenten-Einbrennsysteme auf Basis von Polyhydroxyverbindungen als aktive Wasserstoffatome aufweisende Verbindungen beschrieben, das gute Lagerstabilität bei Raumtemperatur besitzt und gleichzeitig bei niedrigen Temperaturen eingebrannt werden kann, wobei Filme mit hoher Härte und guter Lösemittelbeständigkeit erhalten werden.

Aufgabe der vorliegenden Erfindung war daher die Bereitstellung eines Einkomponenten-Einbrennsystems, das die oben genannten Nachteile des Standes der Technik nicht aufweist und das insbesondere niedrige Einbrenntemperaturen bei guter Lagerstabilität mit guten Lackeigenschaften verbindet, wobei beim Einbrennvorgang kein Blockierungsmittel freigesetzt werden soll.

Diese Aufgabe konnte gelöst werden durch Bereitstellung eines Bindemittelgemisches auf Basis eines hydroxyfunktionellen Bindemittels und eines Vernetzers, der mindestens zwei 6-Ring-Carbonatgruppen im Molekül enthält, in Kombination mit bestimmten Katalysatoren.

Gegenstand der Erfindung sind Einbrennüberzugsmittel aus:
A) einer Polyhydroxyverbindung mit mindestens 2-Hydroxygruppen pro Molekül, ausgewählt aus den Verbindungsklassen hydroxyfunktionelle Polyacrylate, Polyester, Polycarbonate, Polyether, Polyurethane, Polydienharze, Epoxidharze oder einem Gemisch solcher Verbindungen, die frei von zur Umsetzung mit Komponente B) reaktionsfähigen Aminogruppen sind, und
B) einem Vernetzer auf Basis einer Verbindung mit mindestens 2 cyclischen 6-Ring-Carbonatgruppen im Molekül, oder einem Gemisch solcher Verbindungen, dadurch gekennzeichnet, daß man
C) Katalysatorengemische auf Basis von Metallcarboxylaten, die mindestens ein Metall der Gruppen IA, IB, IIA, IIB, IVA oder IVB des Periodensystems und mindestens einen Carboxylatrest der Formel R-COO⁻ enthalten, wobei R einen linearen oder verzweigten, gegebenenfalls substituierten Alkylrest mit 1 bis 20 Kohlenstoffatomen darstellt, in einem Äquivalentverhältnis Carbonatgruppen : OH-Gruppen von 0,5:1 bis 2,0:1 entsprechenden Mengen A:B zusetzt.

Das erfindungsgemäße Gemisch kann abspaltfrei bei Temperaturen zwischen 70° und 150°C zu harten Lackfilmen mit guter Lösemittelbeständigkeit aushärten. Es besitzt außerdem bei Raumtemperatur eine gute Lagerstabilität (Verarbeitungszeit von mindestens 4 Wochen).

Dieses Ergebnis ist überraschend, da die Bindemittelgemische aus 1,3-Dioxan-2-on-gruppen aufweisenden Oligourethanen und Polyhydroxyverbindungen als aktive Wasserstoffatome aufweisende Verbindungen ohne Verwendung der erfindungsgemäßen Komponente C zu hohe Einbrenntemperaturen erfordern. Bindemittelgemische die bekannte Katalysatoren enthalten, die einen nucleophilen Angriff auf eine Carbonylgruppe, insbesondere auf eine Carbonatgruppe katalysieren (z.B. (Erd)alkalimetallhydroxide, -alkoholate oder -phenolate, Zinn- oder Titanalkoholate, tert.-Amine oder p-Toluolsulfonsäure) haben im allgemeinen keine ausreichende Lagerstabilität bei Raumtemperatur oder erfordern zu hohe Einbrenntemperaturen.

Gegenstand der Erfindung ist auch die Verwendung der erfindungsgemäßen Bindemittelgemische, gegebenenfalls in Kombination mit üblichen Lack-Zusatzstoffen zur Herstellung von Einbrennüberzügen z.B. für die Automobilserienlackierung oder für die Kunststofflackierung.

Bei der erfindungsgemäßen Polyhydroxykomponente A) handelt es sich um lineare oder verzweigte Verbindungen mit mindestens 2 Hydroxylgruppen im Molekül und einem Hydroxylgruppengehalt von 0,1 bis 20 Gew.-%, bevorzugt 0,2 bis 10 Gew.-%, besonders bevorzugt 0,4 bis 6 Gew.-%. Beispielhaft seien die in der Lacktechnologie an sich als Corektanden für Polyisocyanate bekannten hydroxyfunktionellen Polyester, Polycarbonate, Polyether, Polyacrylate, Polyurethane, Polydienharze und Epoxidharze oder Mischungen dieser Stoffe genannt: diese hydroxyfunktionellen Verbindungen werden z.B. im 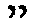 Glasurit-Handbuch, Lacke und Farben", 11. Auflage, Curt R. Vincentz Verlag, Hannover, 1984 oder in D. Stoye, W. Freitag, 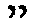 Lackharze", Carl Hanser Verlag, München, Wien, 1996, beschrieben. Bevorzugt werden in den Bindemittelgemischen der vorliegenden Erfindung jedoch hydroxyfunktionelle Polyester, hydroxyfunktionelle Polyacrylate oder Mischungen dieser Komponenten eingesetzt.

Zur Herstellung der genannten hydroxyfunktionellen Polyester eignen sich im Prinzip alle niedermolekularen Polyhydroxyverbindungen, wie z.B. Ethylenglykol, Propandiol-(1,2)- und -(1,3), Butandiol-(1,2), -(1,3), -(1,4) und -(2,3), Pentandiol-(1,5), 3-Methylpentandiol-(1,5), Hexandiol-(1,6), Octandiol-(1,8), 2-Methylpropandiol-(1,3), 2,2-Dimethylpropandiol-(1,3), 2-Ethyl-2-butylpropandiol-(1,3), 2,2,4-Trimethylpentandiol-1,3, 2-Ethylhexandiol-(1,3), höhermolekulare α-ω-Alkandiole mit 9-18 Kohlenstoffatomen, Cyclohexandimethanol, Cyclohexandiole, Glycerin, Trimethylolpropan, Butantriol-(1,2,4), Hexantriol-(1,2,6), Bis-(trimethylolpropan), Pentaerythrit, Mannit, Sorbit, Methylglykosid, niedrigmolekulare Polyvinylalkohole sowie Gemische dieser Alkohole, in Kombination mit mehrbasigen Carbonsäuren wie z.B. Adipinsäuren, Azelainsäure, Sebacinsäure, Phthalsäure, Isophthalsäure, Tetrahydrophthalsäure, Hexahydrophthalsäure, Maleinsäure, den Anhydriden derartiger Säuren oder beliebigen Gemischen derartiger Säuren oder Säureanhydriden. Auch Hydroxylgruppen aufweisende Polylactone, wie z.B. Poly-ε-Caprolacton eignen sich als erfindungsgemäß hydroxyfunktionelle Polyester.

Bei den hydroxyfunktionellen Polyacrylaten handelt es sich um Hydroxylgruppen aufweisende Copolymerisate olefinisch ungesättigter Verbindungen eines mittleren Molekulargewichts Mₙ von 500 bis 100 000, bevorzugt 2 000 bis 30 000. Geeignete nicht hydroxyfunktionelle Monomere zur Herstellung dieser Polyacrylate sind z.B. Acrylsäure oder Methacrylsäurealkylester oder -cycloalkylester mit 1 bis 18, vorzugsweise 1 bis 8 Kohlenstoffatomen mit Alkyl- bzw. Cycloalkylrest wie beispielsweise Methyl-, Ethyl-, n-Propyl, n-Butyl-, Isopropyl-, Isobutyl-, t-Butyl-, die isomeren Pentyl-, Hexyl-, Octyl-, Dodecyl-, Hexadecyl- oder Octadecylester der genannten Säuren, Acetoacetoxyethylmethacrylat, Acrylnitril, Vinylether, Methacrylnitril, Vinylacetat, Styrol oder Vinyltoluol. Außerdem geeignet sind carboxylgruppenhaltige, ungesättigte Monomere, wie beispielsweise Acrylsäure, Methacrylsäure, Itaconsäure, Crotonsäure und Halbester der Malein- und Fumarsäure sowie deren Mischungen oder beliebige Gemische derartiger und anderer Monomerer.

Geeignte alkoholische Hydroxylgruppen aufweisende Monomere sind z.B. die Hydroxyalkylester α,β-ungesättigter Carbonsäuren, insbesondere von Acrylsäure oder Methacrylsäure mit 2 bis 12, vorzugsweise 2 bis 6 Kohlenstoffatomen im Hydroxyalkylrest, wie 2-Hydroxyethylacrylat, die isomeren, durch Anlagerung von 1 Mol Propylenoxid an 1 Mol Acrylsäure erhaltenden Hydroxyropylacrylate, 2-, 3- und 4-Hydroxybutylacrylat, die isomeren Hydroxyhexylacrylate und die diesen Acrylaten entsprechenden Methacrylate. Ebenfalls geeignet sind mit Ethylen-, Propylen- und/oder Butylenoxid modifizierte bzw. kettenverlängerte, hydroxyfunktionelle Monomere eines maximalen Molekulargwichts von 376 g/mol.

Verbindungen, die eine oder mehrere primäre oder sekundäre Aminogruppen im Molekül enthalten (wie z.B. niedermolekulare Polyamine oder aminofunktionelle Epoxyharze), kommen als Komponente A) für die vorliegende Erfindung nicht in Betracht. Zwar besitzen Aminogruppen - wie auch die erfindungsgemäßen Hydroxygruppen- ebenfalls die Fähigkeit zur Reaktion mit der cyclischen Carbonatgruppe der Vernetzerkomponente B), jedoch ist die Reaktivität der aminofunktionellen Komponenten gegenüber Sechsring-Carbonaten so hoch, daß die daraus formulierten Bindemittelgemische unzureichende Lagerstabilitäten aufweisen.

Besonders bevorzugt sind auch Polyhydroxykomponenten A), die frei von primären oder sekundären Aminogruppen sind.

Bei der Vernetzerkomponente B) handelt es sich um Verbindungen mit mindestens zwei Sechsring-Carbonatgruppen im Molekül, insbesondere um die in DE 4 432 647 beschriebenen 1,3-Dioxan-2-on-Gruppen enthaltende Oligourethane, die durch Umsetzung von hydroxyfunktionellen Sechsring-Carbonaten mit Polyisocyanatverbindungen einer mittleren NCO-Funktionalität von mindestens zwei hergestellt werden, wobei die genannten isocyanatfunktionellen Verbindungen ausgewählt aus der Gruppe bestehend aus (i) Lackpolyisocyanaten z.B. Biuretpolyisocyanate, Isocyanuratgruppen (und gegebenenfalls Uretdiongruppen) aufweisende Polyisocyanate, Urethan- und/oder Allophanatgruppen aufweisende Polyisocyanate oder Isocyanurat- und Allophanatgruppen aufweisende Polyisocyanate oder Gemische aus diesen Polyisocyanatkomponenten, (ii) unmodifizierten organischen Polyisocyanaten des Molekulargewichtsbereichs 140 bis 300 g/mol oder (iii) Gemischen der vorstehend genannten Polyisocyanate.

Bevorzugt im Sinne der vorliegenden Erfindung sind solche Oligourethane, die aus 1,3-Dioxan-5-hydroxymethyl-5-ethyl-2-on als Hydroxykomponente und Isocyanuratgruppen oder Isocyanurat und Allophanatgruppen aufweisenden Polyisocyanaten auf Basis von HDI oder IPDI, gegebenenfalls in Abmischung mit HDI und/oder IPDI, aufgebaut sind, wobei der NCO-Gruppen-Anteil der monomeren Diisocyanate nicht mehr als 50 % des gesamten NCO-Gehalts der Isocyanatkomponente betragen darf.

Besonders bevorzugt sind dabei solche Oligourethane, die aus 1,3-Dioxan-5-hydroxymethyl-5-ethyl-2-on als Hydroxykomponente und Isocyanuratgruppen aufweisende Trimerisaten des HDI oder IPDI oder Mischungen dieser Lackpolyisocyanaten aufgebaut sind.

Geeignete Vernetzerkomponenten B im Sinne der vorliegenden Erfindung sind aber auch die in EP 665 260 beschriebenen Polymerisate (Polyvinylverbindungen, Polyacrylate), die sechsgliedrige cyclische Carbonatgruppen als Seitengruppen enthalten.

Erfindungsgemäß enthält das Bindemittelgemisch zusätzlich eine Komponente C als Katalysator für die Vernetzungsreaktion zwischen den Komponenten A und B. Dabei handelt es sich entweder um
C1) organometallische Verbindungen, die mindestens ein Metall der Gruppen IVA oder IVB, bevorzugt Zinn, Titan oder Zirkon, mindestens einen metallgebundenen, gegebenenfalls substituierten Alkyl- oder Aryl-Rest, mindestens einen Carboxylatrest sowie gegebenenfalls weitere metallgebundende Reste, z.B. Halogen-, Hydroxy-, Alkoholat-, Phenolat-, Thioalkoholat- oder Mercapto-Reste enthalten. Bevorzugt werden jedoch Dialkylzinndicarboxylate wie z.B. Dibenzylzinndiacetat, Dibenzylzinndistearat, Dibutylzinndiacetat, Dibutylzinndilaurat, Dibutylzinnmaleat, Dilaurylzinndiacetat, Dioctylzinndiacetat, Dioctylzinndilaurat, Diphenylzinndiacetat oder andere Alkylzinncarboxylate wie z.B. Dibutylmethoxyzinnacetat, Methylzinntrilaurat, Butylzinntrilaurat, Butylzinntriacetat, Butylzinntris(2-ethylhexanoat) oder Kombinationen dieser Verbindungen eingesetzt; besonders bevorzugt ist die Verwendung von Dibutylzinndiacetat.

Neben diesen Verbindungen können als Katalysatorkomponente auch
C2) leicht basische Metallcarboxylate, bevorzugt Natrium-, Kalium-, Magnesium-, Calcium- oder Zinksalze längerkettiger Carbonsäuren mit 6 oder mehr Kohlenstoffatomen, z.B. Caprinsäure, Laurinsäure, Mystrinsäure, Palmitinsäure, Stearinsäure oder α-verzweigte Carbonsäure wie z.B. Versaticsäure verwendet werden. Die Verwendung cycloaliphatischer Carbonsäuren ist ebenfalls möglich. Besonders bevorzugt ist die Verwendung von Natriumlaurinat.

Nicht geeignet als Komponente C in den erfindungsgemäßen Beschichtungsmitteln sind dagegen aus dem Stand der Technik allgemein bekannten Katalysatoren, die einen nucleophilen Angriff auf eine Carbonylgruppe, insbesondere auf eine Carbonatgruppe katalysieren, wie z.B. tert.-Amine, Tetraalkylammoniumhydroxide, basische Metallhydroxide, -alkoholate oder -phenolate. Diese Katalysatoren führen zu bei Raumtemperatur nicht lagerstabilen Einbrennsystemen. Ebenfalls nicht geeignet sind die bekannten sauren Katalysatoren, wie z.B. p-Toluolsulfonsäure oder Trifluormethansulfonsäure, wie sie z.B. in der DE-A 665 260 für die Ringöffnung cyclischer Carbonate mit Hydroxygruppen beschrieben werden; die Katalysatoraktivität reicht hier nicht aus, um niedrige Einbrenntemperaturen zu erreichen.

Die Komponente C wird in Konzentrationen von 0,01 - 2 %, insbesondere 0,1 - 1 % bezogen auf die Summe der Komponenten A und B, eingesetzt, um ein ausgewogenes Verhältnis von niedriger Einbrenntemperatur und guter Lagerstabilität bei Raumtemperatur zu erzielen.

Die erfindungsgemäßen Bindemittelgemische weisen Lagerstabilitäten bei Raumtemperatur-Lagerung von > 2 Wochen, insbesondere > 4 Wochen auf Unter Lagerstabilität wird dabei die Zeit zwischen Vermischung der Komponenten A, B, und C und dem Überschreiten der zur Verarbeitung (im erfindungsgemäßen Einsatzbereich) maximal tolerierbaren Viskosität verstanden.

Die erfindungsgemäßen Bindemittelgemische können bei Temperaturen zwischen 70° und 150°C, insbesondere zwischen 90 und 130°C eingebrannt werden. Nach dem Einbrennen (30-60 min) bei diesen Temperaturen erhält man harte Filme mit guter Lösemittelbeständigkeit, Oberflächenbeschaffenheit und mechanischen Eigenschaften.

Die erfindungsgemäßen Bindemittelgemische können als Bestandteil von Einkomponenten-Einbrennlacken Verwendung finden, insbesondere in den Bereichen Autoserienlackierung oder Kunststofflackierung. Die industrielle Metall- und Holzbeschichtung stellt ebenfalls einen geeigneten Einsatzbereich für Einkomponenten-Einbrennlacke, die die erfindungsgemäßen Bindemittelgemische enthalten, dar.

Bei der erfindungsgemäßen Verwendung kann das Beschichtungsmittel selbstverständlich die üblicherweise bei der Lackformulierung eingesetzten Hilfs- und Zusatzstoffe enthalten. Hierzu gehören beispielsweise Verlaufsmittel, viskositätskontrollierende Zusätze, Pigmente, Füllstoffe, Mattierungsmittel, UV-Stabilisatoren und Antioxidantien.

### Beispiele

Alle Angaben in % beziehen sich auf das Gewicht. Viskositätsmessungen wurden in einem Rotationsviskosimeter nach DIN 53 019 bei einem Schergefälle von 10 s⁻¹ durchgeführt.

### Beispiel 1

### Herstellung eines erfindungsgemäßen Oligourethans

In einem 1 Liter Dreihalskolben mit Rührer, Tropftrichter und Thermometer legt man 160 g (1,0 Mol) 5-Ethyl-5-hydroxymethyl-1,3-dioxan-2-on (TMPC) und 100 g Methoxypropylacetat (MPA) vor und erwärmt auf 70°C. Wenn alles gelöst ist, gibt man innerhalb von 1 Stunde 195 g (=1 Mol NCO-Gruppen) eines Isocyanuratgruppen aufweisenden Lackpolyisocyanats auf HDI-Basis mit einem NCO-Gehalt von 21,8 % (Desmodur® N 3300 der Bayer AG) gelöst in 52,1 g MPA zu. Nach 16 Stunden bei 70°C ist die Umsetzung abgeschlossen und man erhält eine Lösung des erfindungsgemäßen Oligourethans mit einer Viskosität von 21.000 mPa.s.

### Beispiel 2

### Herstellung eines erfindungsgemäßen Oligourethans

In einem 1 Liter Dreihalskolben mit Rührer, Tropftrichter und Thermometer legt man 160 g (1,0 Mol) TMPC und 107 g MPA vor und erwärmt auf 50°C. Bei dieser Temperatur gibt man 0,36 g (0,1 Gew.-%) Dimethylphosphit und 0,73 g (0,2 Gew.-%) Dibutylzinndilaurat zu und rührt, bis man eine homogene Lösung erhält. Man kühlt auf 30°C und dosiert nacheinander innerhalb 1 Stunde 163,8 g eines Isocyanuratgruppen aufweisenden Lackpolyisocyanats auf IPDI-Basis (als 70 %ige Lösung in MPA/Xylol) mit einem NCO-Gehalt von 11,5 % (Lff) (Desmodur® Z 4470 der Bayer AG) und 88,7 g eines Isocyanuratgruppen aufweisenden Lackpolyisocyanats auf HDI-Basis mit einem NCO-Gehalt von 21,8 %) (Desmodur® N 3300 der Bayer AG) gelöst in 86,4 ml MPA, zu. Die Temperatur darf dabei nicht über 35°C steigen. Nach weiteren 6 Stunden bei 30°C ist die Umsetzung abgeschlossen und man erhält eine Lösung des erfindungsgemäßen Oligourethans mit einer Viskosität von 6700 mPa.s.

### Beispiel 3

### Herstellung und Verarbeitung eines erfindungsgemäßen Einkomponenten-Einbrennsystems

100 g des Produktes aus Beispiel 1 werden mit 67,7 g Desmophen® 650, einem hydroxyfunktionellen Polyesterpolyol der Bayer AG, 65 %ig in MPA mit einem OH-Gehalt von 5,2 % (Lff), und 0,84 g (0,5 Gew.-%) Natriumlaurinat versetzt. Die Mischung ist lagerstabil bei Raumtemperatur und nach 4 Wochen Raumtemperatur-Lagerung noch gut verarbeitbar. Sie wurde auf ein Prüfblech appliziert und 30 min bei 120°C eingebrannt. Man erhält einen harten, lösemittelbeständigen Lackfilm.

### Beispiel 4

### Herstellung und Verarbeitung eines erfindungsgemäßen Einkomponenten-Einbrennsystems

100 g des Produktes aus Beispiel 1 werden mit 67,7 g Desmophen® 650, einem hydroxyfunktionellen Polyesterpolyol der Bayer AG, 65 %ig in MPA mit einem OH-Gehalt von 5,2 % (Lff), und 0,84 g (0,5 Gew.-%) Dibutylzinndiacetat versetzt. Die Mischung ist lagerstabil bei Raumtemperatur und nach 4 Wochen Raumtemperatur-Lagerung noch gut verarbeitbar. Sie wurde auf ein Prüfblech appliziert und 30 min bei 120°C eingebrannt. Man erhält einen harten, lösemittelbeständigen Lackfilm.

### Beispiel 5

### Herstellung und Verarbeitung eines erfindungsgemäßen Einkomponenten-Einbrennsystems (nicht erfindungsgemäß)

100 g des Produktes aus Beispiel 1 werden mit 67,7 g Desmophen® 650, einem hydroxyfunktionellen Polyesterpolyol der Bayer AG, 65 %ig in MPA mit einem OH-Gehalt von 5,2 % (Lff), und 0,33 g (0,2 Gew.-%) Kaliumhydroxid versetzt. Die Mischung ist nach 3 Tagen Lagerung bei Raumtemperatur gelartig erstarrt. Ein Teil der frisch hergestellten Mischung wurde auf ein Prüfblech appliziert und 30 min bei 120°C eingebrannt. Man erhält einen harten, lösemittelbeständigen Lackfilm.

### Beispiel 6

### Herstellung und Verarbeitung eines erfindungsgemäßen Einkomponenten-Einbrennsystems

100 g des Produktes aus Beispiel 2 werden mit 58,8 g Desmophen® VP LS 2009/1, einem hydroxyfunktionellen Polyacrylat der Bayer AG, 70 %ig in Butylacetat mit einem OH-Gehalt von 3,0 % (Lff), 24,4 g Desmophen® VP LS 2971, einem hydroxyfunktionellen Polyesterpolyol der Bayer AG, 80 %ig in Butylacetat mit einem OH-Gehalt von 3,8 % (Lff), und 1,2 g (1 Gew.-%) Natriumlaurinat versetzt. Die Mischung ist lagerstabil bei Raumtemperatur und nach 4 Wochen Raumtemperatur-Lagerung noch gut verarbeitbar. Sie wurde auf ein Prüfblech appliziert und 60 min bei 140°C eingebrannt. Man erhält einen harten, lösemittelbeständigen Lackfilm.

## Patentansprüche

1. Einbrennüberzugsmittel aus:
A) einer Polyhydroxyverbindung mit mindestens 2 Hydroxygruppen pro Molekül, ausgewählt aus den Verbindungsklassen hydroxyfunktionelle Polyacrylate, Polyester, Polycarbonate, Polyether, Polyurethane, Polydienharze, Epoxidharze oder einem Gemisch solcher Verbindungen, die frei von zur Umsetzung mit Komponente B) reaktionsfähigen Aminogruppen sind, und
B) einem Vernetzer auf Basis einer Verbindung mit mindestens 2 cyclischen 6-Ring-Carbonatgruppen im Molekül, oder einem Gemisch solcher Verbindungen, dadurch gekennzeichnet, daß man
C) Katalysatorengemische auf Basis von Metallcarboxylaten, die mindestens ein Metall der Gruppen IA, IB, IIA, IIB, IVA oder IVB des Periodensystems und mindestens einen Carboxylatrest der Formel R-COO-enthalten, wobei R einen linearen oder verzweigten, gegebenenfalls substituierten Alkylrest mit 1 bis 20 Kohlenstoffatomen darstellt, in einem Äquivalentverhältnis Carbonatgruppen : OH-Gruppen von 0,5:1 bis 2,0:1 entsprechenden Mengen A:B zusetzt.

2. Einbrennüberzugsmittel gemäß Anspruch 1, dadurch gekennzeichnet, daß es sich bei der Komponente A um hydroxyfunktionelle Polyacrylate oder hydroxyfunktionelle Polyester handelt.

3. Einbrennüberzugsmittel gemäß Anspruch 1, dadurch gekennzeichnet, daß es sich bei der Komponente B um Oligourethane handelt, die durch Umsetzung von 1,3-Dioxan-5-hydrorymethyl-5-ethyl-2-on mit isocyanatfunktionellen Verbindungen hergestellt werden, wobei die genannten isocyanatfunktionellen Verbindungen ausgewählt sind aus der Gruppe bestehend aus (i) Lackpolyisocyanaten z.B. Biuretpolyisocynate, Isocyanuratgruppen (und gegebenenfalls Uretdiongruppen) aufweisende Polyisocyanate, Urethan- und/oder Allophanatgruppen aufweisende Polyisocyanate oder Isocyanurat- und Allophanatgruppen aufweisende Polyisocyanate oder Gemische aus diesen Polyisocyanatkomponenten, (ii) unmodifizierten organischen Polyisocyanaten des Molekulargewichtsbereichs 140 bis 300 g/mol oder (iii) Gemischen der vorstehend genannten Polyisocyanate.

4. Einbrennüberzugsmittel gemäß Anspruch 1, dadurch gekennzeichnet, daß es sich bei der Komponente B um Oligourethane handelt, die aus 1,3-Dioxan-5-hydroxymethyl-5-ethyl-2-on als Hydroxykomponente und Isocyanuratgruppen aufweisenden Trimerisaten des HDI oder IPDI oder Mischungen dieser Lackpolyisocyanaten aufgebaut sind.

5. Einbrennüberzugsmittel gemäß Anspruch 1, dadurch gekennzeichnet, daß es sich bei der Komponente C entweder um
C1) organometallische Verbindungen, die (i) mindestens ein Metall, ausgewählt aus der Gruppe Zinn, Titan oder Zirkon, (ii) mindestens einen metallgebundendem, linearen oder verzweigten, gegebenenfalls substituierten Alkyl- oder Aryl-Rest und (iii) mindestens einem Carboxylatrest der Formel R-COO⁻ enthalten, wobei R einen linearen oder verzweigten, gegebenenfalls substituierten Alkylrest mit 1 bis 20 Kohlenstoffatomen darstellt, sowie (iv) gegebenenfalls weiteren metallgebundenden Resten, z.B. Halogen-, Hydroxy-, Alkoholat-, Phenolat-, Thioalkoholat- oder Mercapto-Resten, oder Kombinationen dieser Verbindungen oder um
C2) leicht basische Metallcarboxylate, die (i) mindestens ein Metall, ausgewählt aus der Gruppe Natrium-, Kalium-, Magnesium-, Calcium- oder Zink und mindestens einen aliphatischen Carboxylatrest der allgemeinen Formel R-COO⁻, wobei R einen linearen oder verzweigten, gegebenenfalls substituierten Alkylrest mit 9 bis 20 Kohlenstoffatomen darstellt, oder um Kombinationen dieser Verbindungen handelt.

6. Einbrennüberzugsmittel gemäß Anspruch 1, dadurch gekennzeichnet, daß es sich bei der Komponente C um Dibutylzinndiacetat oder Natriumlaurinat handelt.

7. Verwendung der Einbrennüberzugsmittel gemäß Anspruch 1 abspaltfrei bei Temperaturen zwischen 90° und 130°C zur Herstellung harter Lackfilme.

8. Verwendung eines Bindelmittelgemisches gemäß Anspruch 1, gegebenenfalls in Kombination mit üblichen Lack-Zusatzstoffen in Einbrennüberzugsmitteln für die Automobilserienlackierung und/oder für die Kunststofflackierung.
